# EUROPÄISCHE PATENTANMELDUNG

(11) **EP 1 092 975 A2**
(43) Veröffentlichungstag der Anmeldung: **18.04.2001**
(21) Anmeldenummer: 00120812.3
(22) Anmeldetag: 23.09.2000
(51) Int. Cl.: G01N 27/407

(54) **Messverfahren und Sensoranordnung**

(30) Priorität: 13.10.1999 DE 19949300
(71) Anmelder: Heraeus Electro-Nite International N.V., 3530 Houthalen (BE)
(72) Erfinder: Cappa, Guido Gustaaf Antoon, 3530 Houthalen (BE); Lenaerts, Silvia, 3511 Kuringen (BE); Voorde, Patrick van de, 8210 Loppem (BE)
(74) Vertreter: Kühn, Hans-Christian

(57) **Zusammenfassung**

Die Erfindung betrifft eine Sensoranordnung und ihre Verwendung sowie ein Verfahren zur Messung von Sauerstoff und/oder der Luft/Kraftstoff - Verhältniszahl λ und mindestens einem weiteren gasförmigen Bestandteil in Meßgasgemischen, mit einer Sensoranordnung, die mindestens eine Sensorelektronik und einen Gassensor umfasst, der mindestens eine einen konstanten Sauerstoffpartialdruck repräsentierende Referenzelektrode, einen Sauerstoffionen leitenden Festelektrolyten und mindestens zwei Meßelektroden auf einer Meßgasseite aufweist. Es stellt sich das Problem, eine Sensoranordnung oder ein Verfahren zur Verfügung zu stellen, durch welche beziehungsweise welches mit niedrigen Aufwand zusätzliche Meßdaten gewonnen werden können. Das Problem wird für das Verfahren dadurch gelöst, daß die Meßelektroden in einer Betriebsart A mit gleichen oder unterschiedlichen Meßprinzipien betrieben werden und daß danach in mindestens einer weiteren Betriebsart B das Meßprinzip an mindestens einer Meßelektrode geändert wird und daß an mindestens einer Meßelektrode je nach Meßprinzip jeweils ein anderer gasförmiger Bestandteil des Meßgasgemisches bestimmt wird.

## Beschreibung

Die Erfindung betrifft eine Sensoranordnung und ihre Verwendung sowie ein Verfahren zur Messung von Sauerstoff und/oder der Luft/Kraftstoff - Verhältniszahl λ und mindestens einem weiteren gasförmigen Bestandteil in Meßgasgemischen, mit einer Sensoranordnung, die mindestens eine Sensorelektronik und einen Gassensor umfasst, der mindestens eine einen konstanten Sauerstoffpartialdruck repräsentierende Referenzelektrode, einen Sauerstoffionen leitenden Festelektrolyten und mindestens zwei Meßelektroden auf einer Meßgasseite aufweist.

Die Schrift WO 99/14584 beschreibt Gassensoren zur Messung von Sauerstoff und/oder der Luft/Kraftstoff Verhältniszahl λ und mindestens einem weiteren gasförmigen Bestandteil, wie beispielsweise Kohlenwasserstoff oder Stickoxid, in Gasgemischen. Der beschriebene Gassensor weist eine einen konstanten Sauerstoffpartialdruck repräsentierende Referenzelektrode, eine Sauerstoffionen leitenden Festelektrolyten, mindestens zwei Meßelektroden und elektrische Leitungen zum Anschluß und zum Abgriff für die elektrischen Meßsignale auf. Der Festelektrolyt ist mit einer dem Meßgas zugewandten und einer dem Meßgas abgewandten Referenzgasseite ausgebildet, wobei die Anordnung der Elektroden mit der Referenzelektrode und den mindestens zwei Meßelektroden gleichzeitig mindestens zwei, auf gleichen oder unterschiedlichen Meßprinzipien basierende Meßsignale liefert, denen unterschiedliche gasförmige Bestandteile zugrunde liegen. Als Meßprinzipien sind der amperometrische und potentiometrische Betrieb von Elektroden genannt. Diese Gassensoren können mehrere Gaskomponenten erfassen und werden vor allem als Abgassensoren in Kraftfahrzeugen verwendet.

Im Hinblick auf die in der Automobiltechnik immer weiter fortschreitende Miniaturisierung ist die Forderung nach Sensoren, die möglichst viele Funktionen in einem einzigen Bauteil vereinen und so eine hohe Anzahl unterschiedlichster Meßergebnisse bei geringem Platzbedarf liefern können, hoch. Es stellt sich das Problem, eine Sensoranordnung oder ein Verfahren zur Verfügung zu stellen, durch welche beziehungsweise welches mit niedrigen Aufwand mehrere Meßdaten gewonnen werden können.

Das Problem wird für das Verfahren dadurch gelöst, daß die Meßelektroden in einer Betriebsart A mit gleichen oder unterschiedlichen Meßprinzipien betrieben werden und daß danach in mindestens einer weiteren Betriebsart B das Meßprinzip an mindestens einer Meßelektrode geändert wird und daß an mindestens einer Meßelektrode je nach Meßprinzip jeweils ein anderer gasförmiger Bestandteil des Meßgasgemisches bestimmt wird. Ist von einer Änderung des Meßprinzips an einer Meßelektrode oder, wie nachfolgend, dem Betrieb einer Meßelektrode die Rede, so ist selbstverständlich immer ein Elektrodenpaar gemeint, welches betrieben beziehungsweise an welchem das Meßprinzip geändert wird. Dabei kann das Elektrodenpaar sowohl aus einer Meßelektrode und einer Referenzelektrode, aber auch aus zwei Meßelektroden gebildet werden. Wird beispielsweise eine Meßelektrode in einer Betriebsart A zur Ermittlung des Stickoxid-Anteils in einem Meßgas verwendet, so kann nach Änderung des Meßprinzips, beispielsweise von amperometrisch auf potentiometrisch, an dieser Meßelektrode ( beziehungsweise an dieser Meßelektrode und der jeweils zugeordneten Gegenelektrode) in der Betriebsart B eine andere Gaskomponente im Meßgas an derselben Meßelektrode detektiert werden. Es kann demnach für die Meßelektrode in Betriebsart B eine andere Gegenelektrode als in Betriebsart A gewählt werden. Daraus können sich weitere Betriebsarten und Möglichkeiten zur Reduzierung der Elektrodenanzahl für den Gassensor einer Sensoranordnung ergeben. Der Gassensor selbst kann dabei mit einem Heizelement beheizt werden, das vom Festelektrolyten isoliert auf einer Isolierschicht angeordnet ist.
Besonders vorteilhaft ist es, wenn der Gassensor drei Meßelektroden aufweist, mit welchen Sauerstoff und/oder die Luft/Kraftstoff - Verhältniszahl λ, Kohlenwasserstoffe oder Kohlenmonoxid sowie Stickoxide bestimmt werden, und in Betriebsart A eine erste und eine zweite Meß-elektrode amperometrisch betrieben werden und eine dritte Meßelektrode potentiometrisch betrieben wird, und daß in einer Betriebsart B die erste Meßelektrode stromlos geschaltet wird und die zweite und die dritte Meßelektrode potentiometrisch betrieben werden. So kann beispielsweise in Betriebsart A an der ersten Meßelektrode Sauerstoff, an der zweiten Meßelektrode Stickoxid und an der dritten Meßelektrode Kohlenwasserstoff oder Kohlenmonoxid bestimmt werden und in Betriebsart B an der zweiten Meßelektrode die Luft/Kraftstoff - Verhältniszahl λ bestimmt und an der dritten Meßelektrode Kohlenwasserstoff oder Kohlenmonoxid bestimmt werden.

Weiterhin ist es vorteilhaft, wenn der Gassensor drei Meßelektroden aufweist, mit welchen Sauerstoff und/oder die Luft/Kraftstoff - Verhältniszahl λ, Kohlenwasserstoff oder Kohlenmonoxid sowie Stickoxide bestimmt werden, und in Betriebsart A eine erste und eine zweite Meßelektrode amperometrisch betrieben werden und eine dritte Elektrode stromlos geschaltet wird, und in Betriebsart 8 die erste Meßelektrode stromlos geschaltet wird und die zweite und die dritte Meßelektrode potentiometrisch betrieben werden. Hier könnte in Betriebsart A an der ersten Meßelektrode Sauerstoff und an der zweiten Meßelektrode Stickoxide bestimmt werden und in Betriebsart B an der zweiten Meßelektrode die Luft/Kraftstoff - Verhältniszahl λ bestimmt werden und an der dritten Meßelektrode Kohlenwasserstoff oder Kohlenmonoxid bestimmt werden.
Das Verfahren kann unter Verwendung einer einzigen Referenzelektrode ausgeführt werden.

Das Problem wird für die Sensoranordnung dadurch gelöst, daß die Sensorelektronik eine Umschalteinrichtung zur Änderung des Meßprinzips an mindestens einer Meßelektrode von einer Betriebsart A auf mindestens eine weitere Betriebsart B aufweist und daß ein je nach Meßprinzip an der Meßelektrode gemessenes Meßsignal je einem anderen gasförmigen Bestandteil des Meßgasgemisches zugeordnet ist. Der Gassensor kann ein Heizelement aufweisen, das vom Festelektrolyten isoliert auf einer Isolierschicht angeordnet werden kann.
In einer bevorzugten Ausgestaltung der Sensoranordnung weist der Gassensor drei Meßelektroden auf, mit welchen Sauerstoff und/oder die Luft/Kraftstoff - Verhältniszahl λ, Kohlenwasserstoffe oder Kohlenmonoxid sowie Stickoxide bestimmt werden, und es wird in Betriebsart A eine erste und eine zweite Meßelektrode amperometrisch betrieben und eine dritte Meßelektrode potentiometrisch betrieben, während in Betriebsart B die erste Meßelektrode stromlos geschaltet ist und die zweite und die dritte Meßelektrode potentiometrisch betrieben wird. In der Betriebsart A könnte hier beispielsweise an der ersten Meßelektrode Sauerstoff, an der zweiten Meßelektrode Stickoxid und an der dritten Meßelektrode Kohlenwasserstoff oder Kohlenmonoxid bestimmt werden und in Betriebsart B an der zweiten Meßelektrode die Luft/Kraftstoff - Verhältniszahl λ bestimmt werden und an der dritten Meßelektrode Kohlenwasserstoff oder Kohlenmonoxid bestimmt werden.

Bevorzugt kann der Gassensor aber auch drei Meßelektroden aufweisen, mit welchen Sauerstoff und/oder die Luft/Kraftstoff - Verhältniszahl λ, Kohlenwasserstoff oder Kohlenmonoxid sowie Stickoxide bestimmt werden, wobei in Betriebsart A eine erste und eine zweite Meßelektrode amperometrisch betrieben werden und eine dritte Elektrode stromlos geschaltet wird, und in Betriebsart B die erste Meßelektrode stromlos geschaltet wird und die zweite und die dritte Meßelektrode potentiometrisch betrieben wird. Hier könnte in Betriebsart A an der ersten Meßelektrode Sauerstoff und an der zweiten Meßelektrode Stickoxide bestimmt werden und in Betriebsart B an der zweiten Meßelektrode die Luft/Kraftstoff - Verhältniszahl λ bestimmt werden und an der dritten Meßelektrode Kohlenwasserstoff oder Kohlenmonoxid bestimmt werden. Der Gassensor der Sensoranordnung kann mit einer einzigen Referenzelektrode ausgeführt sein. Als Materialien für die Meßelektroden kommen beispielsweise Platin für die Messung von Sauerstoff, Platin-Rhodium-Legierungen für die Messung vom Stickoxid oder Platin-Gold-Legierungen für die Messung von Kohlenmonoxid in Frage. Die Bestimmung von Kohlenwasserstoffen im Meßgas kann mit einer Meßelektrode aus Mischoxid, einer perowskitischen Verbindung oder Gold durchgeführt werden. Für Referenzelektroden ist beispielsweise die Verwendung von Platin üblich. Als Festelektrolytmaterial kann unter anderem ein Sauerstoffionen leitendes Material wie Yttrium-stabilisiertes Zirkonoxid oder Ceroxid verwendet werden, während für elektrisch isolierende Schichten Aluminiumoxid eingesetzt werden kann.

Besonders vorteilhaft ist eine erfindungsgemäße Verwendung der Sensoranordnung in der Abgasführung von Kraftfahrzeugen.

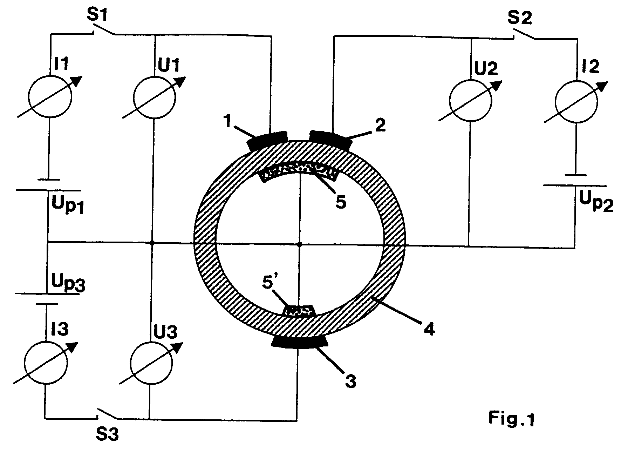

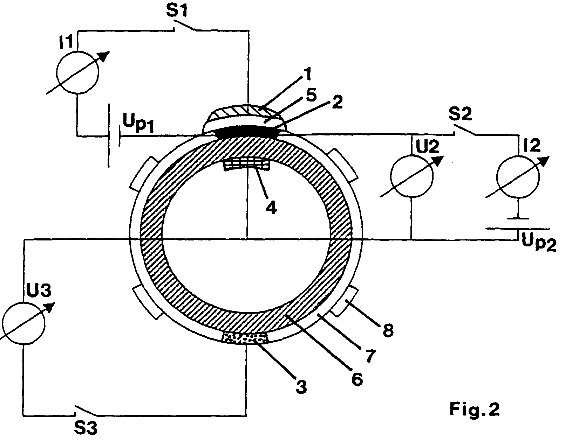

Folgende Figuren 1 und 2 dienen zur beispielhaften Erläuterung der Erfindung:
- Fig. 1: Sensoranordnung mit Sensorelektronik (allgemeiner Fall)
- Fig. 2: Sensoranordnung zur Bestimmung von Sauerstoff, Stickoxiden, Kohlenwasserstoffen und der Luft/Kraftstoff - Verhältniszahl λ mit Sensorelektronik

Fig. 1 zeigt einen Querschnitt durch eine Sensoranordnung mit drei Meßelektroden 1, 2 und 3, die außen auf einem Röhrchen 4 aus Sauerstoffionen leitenden Festelektrolytmaterial angeordnet sind. Das Röhrchen 4 trennt die Meßgasseite, die sich außerhalb des Röhrchens 4 befindet, von der Referenzgasseite. Die Referenzelektroden 5 und 5' befinden sich demnach auf der Referenzgasseite. Die Meßelektroden 1, 2 und 3 sowie die Referenzelektroden 5 und 5'sind mit einer Sensorelektronik verbunden, die drei Trennschalter S1, S2 und S3 aufweist. Zudem weist die Sensorelektronik drei Stromquellen Uₚ₁, Uₚ₂ und Uₚ₃ auf, drei Spannungsmeßgeräte U1, U2, und U3 sowie drei Strommeßgeräte I1, I2 und I3. Dargestellt sind die drei Trennschalter S1, S2 und S3 in geöffnetem Zustand. In diesem Betriebszustand A werden die drei Meßelektroden 1; 2; 3 gegenüber den Referenzelektroden 5; 5' potentiometrisch betrieben. Dabei bilden die Meßelektrode 1 und die Referenzelektrode 5, die Meßelektrode 2 und die Referenzelektrode 5 sowie die Meßelektrode 3 und die Referenzelektrode 5' jeweils ein Elektrodenpaar. Je nach Meßelektrodenmaterial kann nun eine bestimmte Gaskomponenete im Meßgas bestimmt werden. Um nun einen Betriebszustand B einzustellen, muß mindestens einer der Trennschalter S1; S2; S3 geschlossen werden. Dafür sind nun verschiedene kombinatorische Möglichkeiten vorhanden. Eine Möglichkeit ist, alle drei Trennschalter S1; S2; S3 zu schließen. In diesem möglichen Betriebszustand B werden die drei Meßelektroden 1; 2; 3 gegenüber den Referenzelektroden 5; 5' amperometrisch betrieben. Je nach Meßelektrodenmaterial kann nun an jeder Meßelektrode beziehungsweise jedem Elektrodenpaar eine andere Gaskomponenete als in Betriebsart A im Meßgas bestimmt werden.

Fig. 2 zeigt ein konkretes Beispiel für eine Sensoranordnung zur Bestimmung von Sauerstoff, Stickoxid und Kohlenwasserstoffen in Betriebsart A und der Luft/Kraftstoff - Verhältniszahl λ und Kohlenwasserstoffen in einer Betriebsart B. Die im Querschnitt gezeigte rohrförmige Sensoranordnung weist drei Meßelektroden 1; 2; 3 und eine Referenzelektrode 4 auf. Die Meßelektroden 1 und 2 sind durch eine poröse Schicht 5 aus Festelektrolytmaterial voneinander getrennt angeordnet. Die Meßelektroden 1 und 3 stehen in direktem Kontakt zur Meßgasseite, während die Referenzelektrode 4 in direktem Kontakt zur Referenzgasseite angeordnet ist. Die Meßgasseite und die Referenzgasseite sind durch ein Röhrchen 6 aus Festelektrolytmaterial getrennt, welches eine Isolierschicht 7 aufweist, die ein gleichmäßig auf der Isolierschicht 7 angeordnetes elektrisches Heizelement 8 trägt. Von diesem elektrischen Heizelement 8 sind im gezeigten Schnittbild vier Teile erkennbar. Als Material wurde in diesem Beispiel für die Meßelektrode 1 Platin, für die Meßelektrode 2 eine Legierung aus Platin-Rhodium und für die Meßelektrode 3 ein Mischoxid verwendet. Die Referenzelektrode 4 und das elektrische Heizelement 8 wurde aus Platin hergestellt. Als Festelektrolytmaterial für das Röhrchen 6 und die Schicht 5 wurde Sauerstoffionen leitesndes, Yttrium-stabilisiertes ZrO₂ gewählt. Die Isolierschicht 7 ist aus Al₂O₃ gebildet. Die Meßelektroden 1, 2 und 3 sowie die Referenzelektrode 4 sind mit einer Sensorelektronik verbunden, die drei Trennschalter S1, S2 und S3 aufweist. Zudem weist die Sensorelektronik zwei Stromquellen Uₚ₁ und Uₚ₂ auf, zwei Spannungsmeßgeräte U2 und U3 sowie zwei Strommeßgeräte I1 und I2. Dargestellt sind die drei Trennschalter S1, S2 und S3 in geöffnetem Zustand. Eine Betriebsart A wird nun eingestellt, wenn die Trennschalter S1, S2 und S3 geschlossen werden. Die Meßelektrode 1 wird amperometrisch gegenüber Meßelektrode 2 betrieben. Dieses Elektrodenpaar bildet eine Pumpzelle und es kann über den Pumpstrom amperometrisch O₂ bestimmt werden. Die Meßelektrode 2 wird amperometrisch gegenüber Referenzelektrode 4 betrieben. Mit diesem Elektrodenpaar kann über den Pumpstrom amperometrisch NOx bestimmt werden. Die Meßelektrode 3 wird potentiometrisch gegenüber der Referenzelektrode 4 betrieben. Das Spannungssignal wird zur Bestimmung der Kohlenwasserstoffe im Meßgas ausgewertet. Um den Betriebszustand B einzustellen, werden die Trennschalter S1 und S2 geöffnet, während der Trennschalter S3 geschlossen bleibt. Die Meßelektrode 2 wird nun potentimetrisch gegenüber der Referenzelektrode 4 betrieben und es wird an diesem Elektrodenpaar die Luft/Kraftstoff-Verhälniszahl λ ermittelt.

## Patentansprüche

1. Verfahren zur Messung von Sauerstoff und/oder der Luft/Kraftstoff - Verhältniszahl λ und mindestens einem weiteren gasförmigen Bestandteil in Meßgasgemischen, mit einer Sensoranordnung, die mindestens eine Sensorelektronik und einen Gassensor umfasst, der mindestens eine einen konstanten Sauerstoffpartialdruck repräsentierende Referenzelektrode, einen Sauerstoffionen leitenden Festelektrolyten und mindestens zwei Meßelektroden auf einer Meßgasseite aufweist, dadurch gekennzeichnet, daß die Meßelektroden in einer Betriebsart A mit gleichen oder unterschiedlichen Meßprinzipien betrieben werden und daß danach in mindestens einer weiteren Betriebsart B das Meßprinzip an mindestens einer Meß-elektrode geändert wird und daß an mindestens einer Meßelektrode je nach Meßprinzip jeweils ein anderer gasförmiger Bestandteil des Meßgasgemisches bestimmt wird.

2. Verfahren nach Anspruch 1, dadurch gekennzeichnet, daß der Gassensor mit einem Heizelement beheizt wird, das vom Festelektrolyten isoliert auf einer Isolierschicht angeordnet ist.

3. Verfahren nach einem der Ansprüche 1 oder 2, dadurch gekennzeichnet, daß der Gassensor drei Meßelektroden aufweist, mit welchen Sauerstoff und/oder die Luft/Kraftstoff - Verhältniszahl λ, Kohlenwasserstoffe oder Kohlenmonoxid sowie Stickoxide bestimmt werden, und daß in Betriebsart A eine erste und eine zweite Meßelektrode amperometrisch betrieben werden und eine dritte Meßelektrode potentiometrisch betrieben wird, und daß in Betriebsart B die erste Meßelektrode stromlos geschaltet wird und die zweite und die dritte Meßelektrode potentiometrisch betrieben werden.

4. Verfahren nach Anspruch 3, dadurch gekennzeichnet, daß in Betriebsart A an der ersten Meßelektrode Sauerstoff, an der zweiten Meßelektrode Stickoxid und an der dritten Meßelektrode Kohlenwasserstoff oder Kohlenmonoxid bestimmt wird und daß in Betriebsart B an der zweiten Meßelektrode die Luft/Kraftstoff - Verhältniszahl λ bestimmt und an der dritten Meßelektrode Kohlenwasserstoff oder Kohlenmonoxid bestimmt wird.

5. Verfahren nach einem der Ansprüche 1 oder 2, dadurch gekennzeichnet, daß der Gassensor drei Meßelektroden aufweist, mit welchen Sauerstoff und/oder die Luft/Kraftstoff - Verhältniszahl λ, Kohlenwasserstoff oder Kohlenmonoxid sowie Stickoxide bestimmt werden, und daß in Betriebsart A eine erste und eine zweite Meßelektrode amperometrisch betrieben werden und eine dritte Elektrode stromlos geschaltet wird, und daß in Betriebsart B die erste Meßelektrode stromlos geschaltet wird und die zweite und die dritte Meßelektrode potentiometrisch betrieben werden.

6. Verfahren nach Anspruch 5, dadurch gekennzeichnet, daß in Betriebsart A an der ersten Meßelektrode Sauerstoff und an der zweiten Meßelektrode Stickoxide bestimmt werden und daß in Betriebsart B an der zweiten Meßelektrode die Luft/Kraftstoff - Verhältniszahl λ bestimmt wird und an der dritten Meßelektrode Kohlenwasserstoff oder Kohlenmonoxid bestimmt wird.

7. Verfahren nach einem der Ansprüche 1 bis 6, dadurch gekennzeichnet, daß eine einzige Referenzelektrode verwendet wird.

8. Sensoranordnung mit einer Sensorelektronik und einem Gassensor zur Messung von Sauerstoff und/oder der Luft/Kraftstoff - Verhältniszahl λ und mindestens einem weiteren gasförmigen Bestandteil in Meßgasgemischen, wobei der Gassensor mindestens eine einen konstanten Sauerstoffpartialdruck repräsentierende Referenzelektrode, einen Sauerstoffionen leitenden Festelektrolyten und mindestens zwei Meßelektroden auf einer Meßgasseite aufweist, wobei die Meßelektroden durch die Sensorelektronik mit gleichen oder unterschiedlichen Meßprinzipien betrieben werden, dadurch gekennzeichnet, daß die Sensorelektronik eine Umschalteinrichtung zur Änderung des Meßprinzip an mindestens einer Meßelektrode von einer Betriebsart A auf mindestens eine weitere Betriebsart B aufweist und daß ein je nach Meßprinzip an der Meßelektrode gemessenes Meßsignal je einem anderen gasförmigen Bestandteil des Meßgasgemisches zugeordnet ist.

9. Sensoranordnung nach Anspruch 8, dadurch gekennzeichnet, daß der Gassensor ein Heizelement aufweist, das vom Festelektrolyten isoliert auf einer Isolierschicht angeordnet ist.

10. Sensoranordnung nach einem der Ansprüche 8 bis 9, dadurch gekennzeichnet, daß der Gassensor drei Meßelektroden aufweist, mit welchen Sauerstoff und/oder die Luft/Kraftstoff-Verhältniszahl λ, Kohlenwasserstoffe oder Kohlenmonoxid sowie Stickoxide bestimmt werden, und daß in Betriebsart A eine erste und eine zweite Meßelektrode amperometrisch betrieben sind und eine dritte Meßelektrode potentiometrisch betrieben ist, und daß in Betriebsart B die erste Meßelektrode stromlos geschaltet ist und die zweite und die dritte Meßelektrode potentiometrisch betrieben ist.

11. Sensoranordnung nach Anspruch 10, dadurch gekennzeichnet, daß in Betriebsart A an der ersten Meßelektrode Sauerstoff, an der zweiten Meßelektrode Stickoxid und an der dritten Meßelektrode Kohlenwasserstoff oder Kohlenmonoxid bestimmt wird und daß in Betriebsart B an der zweiten Meßelektrode die Luft/Kraftstoff - Verhältniszahl λ bestimmt wird und an der dritten Meßelektrode Kohlenwasserstoff oder Kohlenmonoxid bestimmt wird.

12. Sensoranordnung nach einem der Ansprüche 8 bis 9, dadurch gekennzeichnet, daß der Gassensor drei Meßelektroden aufweist, mit welchen Sauerstoff und/oder die Luft/Kraftstoff-Verhältniszahl λ, Kohlenwasserstoff oder Kohlenmonoxid sowie Stickoxide bestimmt werden, und daß in Betriebsart A eine erste und eine zweite Meßelektrode amperometrisch betrieben sind und eine dritte Elektrode stromlos geschaltet ist, und daß in Betriebsart B die erste Meßelektrode stromlos geschaltet ist und die zweite und die dritte Meßelektrode potentiometrisch betrieben ist.

13. Sensoranordnung nach Anspruch 12, dadurch gekennzeichnet, daß in Betriebsart A an der ersten Meßelektrode Sauerstoff und an der zweiten Meßelektrode Stickoxide bestimmt werden und daß in Betriebsart B an der zweiten Meßelektrode die Luft/Kraftstoff - Verhältniszahl λ bestimmt wird und an der dritten Meßelektrode Kohlenwasserstoff oder Kohlenmonoxid bestimmt wird.

14. Sensoranordnung nach einem der Ansprüche 8 bis 13, dadurch gekennzeichnet, daß der Gassensor eine einzige Referenzelektrode aufweist.

15. Verwendung der Sensoranordnung nach einem der Ansprüche 8 bis 14 in der Abgasführung von Kraftfahrzeugen.
